(19) Europäisches Patentamt
European Patent Office
Office européen des brevets

(11) Numéro de publication: **0 351 337**
**A1**

(12) # DEMANDE DE BREVET EUROPEEN

(21) Numéro de dépôt: **89420252.2**

(22) Date de dépôt: **11.07.89**

(51) Int. Cl.5: **C 08 K 7/00**
C 08 L 67/00

(30) Priorité: **13.07.88 FR 8809768**

(43) Date de publication de la demande:
**17.01.90 Bulletin 90/03**

(84) Etats contractants désignés:
**AT BE CH DE ES FR GB GR IT LI LU NL SE**

(71) Demandeur: **RHONE POULENC CHIMIE**
**25 Quai Paul Doumer**
**F-92408 Courbevoie Cédex (FR)**

(72) Inventeur: **Morin, Alain**
**87, rue du Fort Saint-Irénée**
**F-69005 Lyon (FR)**

**Quentin, Jean-Pierre**
**35 D, rue Joliot-Curie**
**F-69005 Lyon (FR)**

(74) Mandataire: **Trolliet, Maurice et al**
**RHONE-POULENC CHIMIE Service Brevets Chimie**
**Centre de Recherches des Carrières B.P. 62**
**F-69192 Saint-Fons Cédex (FR)**

Revendications pour l'Etat contractant suivant: ES.

(54) **Compositions de moulage à base de polymères thermotropes renforcés par des charges minérales.**

(57) la présente invention concerne des compositions, utilisables pour faire des objets moulés, comprenant un polymère thermotrope et une charge minérale de renforcement particulière.

Selon l'invention, la charge minérale répond aux définitions suivantes :

. elle appartient à la famille des charges minérales cristallines de forme plaquettaire ayant un diamètre moyen qui se situe dans l'intervalle allant de 0,5 à 400 µm et un facteur de forme représenté par le rapport :

$$\frac{\text{diamètre moyen des particules en µm}}{\text{épaisseur moyenne des particules en µm}}$$

qui se situe dans l'intervalle allant de 10 à 90 ;

. elle est mise en oeuvre en utilisant des quantités d'emploi, exprimées en % en poids de charge dans l'ensemble polymère + charge, qui se situent dans l'intervalle allant de 20 % à 60 %, avec la condition complémentaire selon laquelle ces quantités se situent dans l'intervalles allant d'une valeur supérieure à 50 % jusqu'à 60 % quand le diamètre moyen des particules est inférieur à 20 µm.

Les objets moulés obtenus à partir des ces compositions présentent des propriétés mécaniques amélioreées dont l'anisotropie est fortement réduite.

EP 0 351 337 A1

**Description**

**COMPOSITIONS DE MOULAGE A BASE DE POLYMERES THERMOTROPES RENFORCES PAR DES CHARGES MINERALES**

La présente invention concerne des compositions, qui peuvent aisément conduire à des articles conformés par moulage à partir de l'état fondu, comprenant un polymère thermotrope et une charge minérale de renforcement spécialement adaptée à ce polymère thermotrope. Elle concerne également les articles conformés réalisés à partir de ces compositions.

Depuis une dizaine d'années, il se développe un intérêt qui va en grandissant a l'égard des polymères thermotropes. Cet intérêt est lié au fait que ces polymères sont capables de former des masses fondues anisotropes qui possèdent une orientation propre et un degré relativement élevé d'organisation. Cette orientation et cette organisation se retrouvent dans les objets moulés en leur conférant (déjà à l'état brut) des propriétés mécaniques améliorées (notamment en matière de module et de résistance en flexion) que l'on n'observe pas habituellement sur les produits bruts isotropes. Mais dans certaines circonstances, un désavantage des objets moulés à partir d'une masse fondue anisotrope, qui apparaît, réside dans le non-équilibrage (ou anisotropie) des propriétés longitudinales (dans la direction de l'écoulement de la masse fondue qui est par exemple le sens d'injection dans le cas d'un moulage par injection) et des propriétés transversales (dans la direction perpendiculaire à celle de l'écoulement).

On sait réduire l'anisotropie des matériaux polymères par addition de charges minérales.

Un premier but de la présente invention est de fournir des compositions comprenant un polymère thermotrope à une charge minérale spécialement adaptée qui permettent de conduire à des articles conformés présentant simultanément les deux propriétés suivantes :

- le rapport d'anisotropie (RA) qui est représenté par le rapport suivant :

$$\frac{\text{module longitudinal en flexion (ML)}}{\text{module transversal en flexion (MT)}}$$

dans lequel les modules sont mesurés dans les conditions définies ci-après dans le présent mémoire, est réduit d'au moins 50 % par rapport à ce qui se passe avec le polymère non chargé, et

- la somme ML + MT est au moins égale à 1,5 fois la valeur de la même somme obtenue dans le cas du polymère non chargé.

Le taux de réduction du RA est calculé en appliquant la relation habituelle suivante :

$$\frac{\text{RA du polymère non chargé - RA du polymère chargé}}{\text{RA du polymère non chargé}} \times 100$$

On sait encore que, pour confectionner des articles conformés par moulage, on doit éviter d'utiliser des quantités de charges trop importantes - telles que celles supérieures à 60 % en poids de charge, par rapport à l'ensemble polymère + charge - de manière à ce que les charges ne jouent pas un rôle néfaste sur les propriétés d'état de surface et sur la stabilité dimensionnelle des articles obtenus. En outre il est connu que les polymères fortement chargés présentent une viscosité trop élevée à l'état fondu pour permettre un moulage de précision avec si nécessaire un bon rendu d'empreinte.

Un autre but de la présente invention est de fournir des compositions permettant de conduire à des articles conformés dont la combinaison de propriétés énoncées ci-avant est obtenue avec des quantités de charges qui restent inférieures ou égales a 60 % en poids.

Dans le document EP-A-0.044.147, on a proposé de réduire l'anisotropie des polymères thermotropes par addition de charges fibrillaires inertes ayant une forme aciculaire comme par exemple des fibres de verre courtes ou de la wollastonite, mais on a constaté que les buts en matière d'anisotropie (RA et somme ML + MT) et de quantité de charge, qui ont été définis ci-avant, ne peuvent pas être atteints conjointement avec de pareilles charges.

Il a maintenant été trouvé qu'on pouvait atteindre l'ensemble des buts définis ci-avant grâce aux compositions judicieusement choisies dont la description va suivre.

Plus précisément, la présente invention concerne des compositions de moulage qui comprennent :

a) un polymère thermotrope, et

b) une charge minérale de renforcement,

caractérisées en ce que la charge minérale (b) répond aux définitions suivantes :

. elle appartient à la famille des charges minérales cristallines de forme plaquettaire ayant un diamètre moyen

qui se situe dans l'intervalle allant de 0,5 à 400 µm et un facteur de forme représenté par le rapport :

$$\frac{\text{diamètre moyen des particules en µm}}{\text{épaisseur moyenne des particules en µm}}$$

qui se situe dans l'intervalle allant de 10 à 90 ;

. elle est mise en oeuvre en utilisant des quantités d'emploi, exprimées en % en poids de charge dans l'ensemble polymère + charge, qui se situent dans l'intervalle allant de 20 % à 60 %, avec la condition complémentaire selon laquelle ces quantités se situent dans l'intervalles allant d'une valeur supérieure à 50 % jusqu'à 60 % quand le diamètre moyen des particules est inférieur à 20 µm.

Des polymères thermotropes qui conviennet pour la mise en oeuvre de la présente invention comprennent les polyesters totalement aromatiques, les polyesters alkylaromatiques, les polyesteramides totalement aromatiques, les polyesteramides alkylaromatiques, les polyazométhines aromatiques, les polyesters carbonates aromatiques et les mélanges de ces polymères.

Selon une modalité préférentielle de mise en oeuvre de la présente invention, les polymères thermotropes auxquels on fait appel sont les polyesters totalement aromatiques, les polyesteramides totalement aromatiques et les mélanges de ces polymères.

Des polyesters totalement aromatiques qui sont thermotropes, c'est-à-dire qui sont capables de former des masses fondues anisotropes sont décrits par exemple : dans les brevets américains n° 3.991.013, 3.991.014, 4.066.620, 4.075.262, 4.118.372, 4.130.545, 4.161.470, 4.181.792, 4.188.476, 4.219.461, 4.224.433, 4.230.817, 4.346.208 ; dans la demande de brevet européen n° 86420013.4 publiée sous le n° 0.191.705 ; et dans la demande de brevet français n° 87/10177 déposée le 10 juillet 1987 par la Demanderesse ; la substance de ces brevets ou demandes de brevets est incorporée ici en référence.

Des polyesteramides totalement aromatiques qui sont thermotropes sont décrits par exemple : dans les brevets américains n° 4.272.625, 4.330.457, 4.339.375, 4.355.132 ; dans la demande de brevet européen n° 87420327.6 publiée sous le n° 0.272.992 ; et dans les demandes de brevets français n° 87/10177, 87/10178 et 87/10179 déposées le 10 juillet 1987 par la Demanderesse ; la substance de ces brevets ou demandes de brevets est incorporée ici aussi en référence.

Les polymères thermotropes qui sont choisis pour la mise en oeuvre de la présente invention sont ceux, appartenant aux familles générales ou préférées précitées, qui possèdent une température d'écoulement se situant dans l'intervalle allant de 200° C à 350° C et, de préférence, allant de 260° C à 330° C et qui présentent une viscosité inhérente au moins égale à 0,5 $dlg^{-1}$ et se situant préférentiellement dans l'intervalle allant de 1,0 à 4,0 $dlg^{-1}$. On entend par "température d'écoulement", la température à laquelle les bords d'un échantillon sous forme de copeau de polymère ou de fibre coupée commencent à s'arrondir ; cette température est déterminée par observation visuelle de l'échantillon sur une lamelle couvre-objet pour une vitesse de montée en température appropriée généralement de l'ordre de 10° C à 20° C par minute, observation faite à l'aide d'un microscope équipé d'une platine chauffante connu dans le commerce sous la marque THERMOPAN. A propos de la viscosité inhérente, on précisera qu'elle est mesurée à 25° C sur une solution renfermant 0,5 g de polymère pour 100 $cm^3$ d'un mélange solvant parachlorophénol/dichloro-1,2 éthane (50/50 en volume).

Des polyesters et des polyesteramides totalement aromatiques thermotropes qui sont tout spécialement préférés pour la mise en oeuvre de la présente invention sont ceux décrits dans les demandes de brevets européens n° 86420013.4 (publiée sous le n° 0.191.705) et n° 87420327.6 (publiée sous le n° 0.272.992). Ces polyesters et polyesteramides présentent les particularités suivantes :

- ils comprennent des unités de récurrence de formule (I), (II), (III) et (IV), la présence des unités (II) étant facultative :

(I) désignant la stucture :

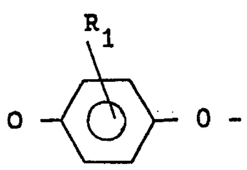

dans laquelle $R_1$ représente un radical méthyle ou éthyle ou un atome de chlore ou de brome, les unités (I) pouvant être identiques ou différentes entre elles,

(II) désignant la structure :

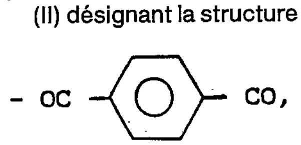

(III) désignant la structure :

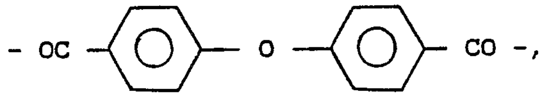

(IV) désignant la structure :

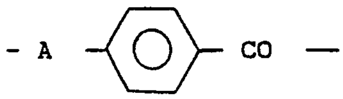

dans laquelle le symbole A représente un atome d'oxygène ou le groupement NH ; - le rapport molaire des unités (I) par rapport à la somme des unités (II) + (III) se situe dans l'intervalle allant de 0,95 à 1,05 ;
- la quantité des unités (II) dans le mélange (II) + (III) se situe dans l'intervalle allant de 0 à 70 % en mole et celle des unités (III), par rapport à la même référence, se situe dans l'intervalle allant de 100 à 30 % en mole ;
- la quantité des unités (IV), exprimée par rapport à la quantité des unités (I), se situe dans l'intervalle allant, dans le cas où A = O, de 10 à 300 % en mole et, dans le cas où A = NH, de 5 à 100 % en mole.

Selon une modalité encore plus spécialement préférentielle, les polyesters et polyesteramides aromatiques utilisables dans la présente invention présentent une structure telle que celle définie ci-avant dans laquelle :
- la quantité des unités (II) dans le mélange (II) + (III) se situe dans l'intervalle allant de 20 à 60 % en mole et celle des unités (III), par rapport à la même référence, va de 80 à 40 % en mole,
- et la quantité des unités (IV), exprimée par rapport à la quantité des unités (I), se situe dans l'intervalle allant, dans le cas où A = O, de 30 à 200 % en mole et, dans le cas où A = NH, de 10 à 60 % en mole. Parmi les polyesters et les polyesteramides aromatiques correspondant à cette modalité encore plus spécialement préférentielle, ceux qui conviennent bien sont les polymères présentant une structure dans laquelle les unités (I) sont identiques, avec le substituant $R_1$ représentant un radical méthyle ou un atome de chlore.

Les polyesters et polyesteramides aromatiques tout spécialement préférés dont on vient de parler englobent aussi les polymères qui peuvent contenir en outre dans leur structure des unités aromatiques génératrices de fonctions esters et amides (unités dioxy et/ou unités dicarbonyle et/ou unités mixtes oxy/carbonyle ou amino-secondaire/carbonyle) ayant une structure autre que celle des unités (I), (II), (III) et (IV), la quantité totale de ces unités supplémentaires étant au plus égale à 10 % en mole par rapport à la quantité des unités (I). Une liste non limitative de ces unités supplémentaires est la suivante :

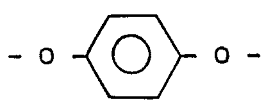 (I')

et/ou 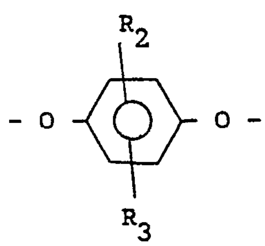 (I") où $R_2$

et $R_3$, qui peuvent être identiques ou différents, ont chacun la définition donnée ci-avant pour $R_1$, les unités (I") pouvant être identiques ou différentes entre elles,

et/ou 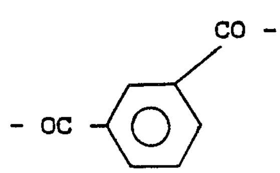 (II')

et/ou 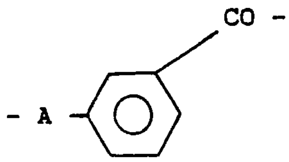 (IV') où le symbole A a la signification donnée ci-avant à propos des unités (IV).

Un autre type de polyesters et polyesteramides totalement aromatiques thermotropes qui sont aussi tout spécialement préférés pour la mise en oeuvre de la présente invention consiste dans les polymères décrits dans les brevets américains n° 4.161.470 et 4.330.457 qui présentent les particularités suivantes :

. S'agissant des polyesters :

- ils comprennent des unités de récurrence de formule (V) et (VI) :

(V) désignant la structure :

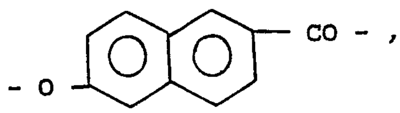

(VI) désignant la structure :

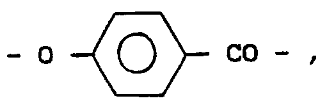

- la quantité des unités (V) dans le mélange (V) + (VI) se situe dans l'intervalle allant de 10 à 90 % en mole et celle des unités (VI), par rapport à la même référence, se situe dans l'intervalle allant de 90 à 10 % en mole ;

. S'agissant des polyesteramides :

- ils comprennent des unités de récurrence de formules (VII), (VIII) et (IX) :

(VII) désignant la structure :

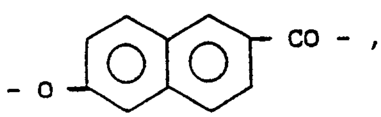

(VIII) désignant la structure :

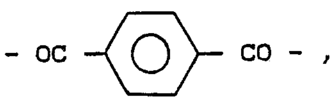

(IX) désignant la structure :

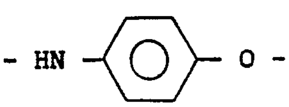 ou 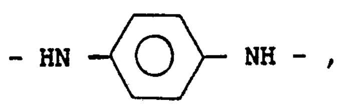

- la quantité des unités (VII) dans le mélange (VII) + (VIII) + (IX) se situe dans l'intervalle allant de 10 à 90 % en mole, celle des unités (VIII), par rapport à la même référence, se situe dans l'intervalle allant de 5 à 45 % en mole et celle des unités (IX), par rapport à la même référence, se situe dans l'intervalle allant de 5 à 45 % en mole.

Parmi les polyesters et les polyesteramides totalement aromatiques appartenant à cet autre groupe de polymères tout spécialement préférés, ceux qui conviennent bien sont les polymères mis dans le commerce par la Société CELANESE, sous la marque déposée VECTRA, de type A 900 (polyester) ou B 900 (polyesteramide).

Comme charges minérales cristallines de forme plaquettaire, ayant un diamètre moyen qui se situe dans l'intervalle allant de 0,5 à 400 µm et ayant un facteur de forme qui se situe dans l'intervalle allant de 10 à 90, qui sont utilisées de manière préférentielle, on citera en particulier : le mica, le talc naturel, le talc calciné ou un mélange de ces espèces.

Le mica mis en oeuvre peut appartenir à l'un ou l'autre des familles et genres suivants : mica blanc, genre : notamment muscovite, phengite et paragonite ; mica noir, genre : notamment biotite et phlogopite ; mica rose,

genre : notamment lépidolite. Quant au talc, de formule chimique $Mg_3$ $Si_4$ $O_{10}$ $(OH)_2$, il peut appartenir notamment soit à la variété ferrifère, soit à la variété nickelifère. La charge minérale selon la présente invention peut être aussi du talc ayant subi un traitement de calcination. Ce traitement consiste à chauffer le talc choisi à une température au moins égale à 500° C se situant plus précisément entre 800° C et 1100° C en opérant dans l'air ambiant, sous atmosphère d'azote ou sous atmosphère d'air humide ; on peut travailler dans un four statique, dans un four tournant ou dans un appareil de calcination flash, pendant une durée allant par exemple de 2 heures à 5 heures.

L'emploi du mica correspond à un mode de réalisation de l'invention particulièrement intéressant. L'emploi du mica noir appartenant au genre phlogopite, pour renforcer le polymère thermotrope, correspond à un mode de réalisation de l'invention plus particulièrement intéressant.

Habituellement, on fait appel, dans le cas du mica, à une charge comportant des écailles dont le diamètre moyen est compris entre 10 µm et 400 µm et, de préférence, entre 20 µm et 300 µm ; dans le cas du talc, naturel ou calciné, on fait appel à une charge comportant des particules dont le diamètre moyen est compris entre 0,5 µm et 100 µm et, de préférence, entre 1 µm et 15 µm. Quant au facteur de forme, il se situe de préférence entre 30 et 90 dans le cas du mica et entre 10 et 30 dans le cas du talc, naturel ou calciné.

Les quantités de charge minérale de renforcement à utiliser pour préparer les compositions selon l'invention sont celles indiquées ci-avant dans le présent mémoire. A noter que la borne minimale de ces quantités doit être augmentée de 20 à une valeur supérieure à 50 % et plus précisément de 20 à 51 % quand le diamètre moyen des particules est inférieur à 20 µm (c'est le cas notamment lorsque l'on fait appel aux talcs du commerce), de manière à ce que la charge produise l'effet technique souhaité qui est présenté ci-avant dans le premier but de l'invention. Des résultats très satisfaisants en matière d'anisotropie (RA et somme ML + MT) sont obtenus avec des quantités de charge minérale qui se situent de préférence dans l'intervalle allant de 20 % à 50 % en poids lorsque le diamètre moyen des particules est égal ou supérieur à 20 µm ; dans le cas où ce diamètre moyen est très inférieur à 20 µm, comme un diamètre moyen compris entre 1 µm et 15 µm, les résultats très satisfaisants dont on vient de parler correspondent à des quantités de charge minérale qui se situent de préférence dans l'intervalle allant de 55 % à 60 % en poids.

Un mode de réalisation de l'invention encore plus particulièrement intéressant consiste donc à mettre en oeuvre du mica ayant un diamètre moyen compris entre 20 µm et 300 µm et un facteur de forme se situant entre 30 et 90, cette charge minérale étant utilisée dans des quantités situées dans l'intervalle allant de 20 % à 50 % en poids.

Un autre mode de réalisation intéressant de l'invention consiste aussi à mettre en oeuvre du talc naturel ayant un diamètre moyen compris entre 1 µm et 15 µm et un facteur de forme se situant entre 10 et 30, cette charge minérale étant utilisée dans des quantités situées dans l'intervalle allant de 55 % à 60 % en poids.

Les compositions selon la présente invention peuvent comprendre en outre, et il s'agit là d'une mesure pouvant être avantageuse en particulier dans le cas de l'emploi de mica et/ou de talc calciné, un agent de couplage. Cet agent de couplage est habituellement choisi parmi les composés organosiliciques polyfonctionnels. Ces composés comprennent au moins un groupe alkoxysilane $\geqslant Si - O - R_4$ dans lequel $R_4$ représente un reste alkyle inférieur capable de se lier avec la charge minérale et au moins un autre groupe capable de se lier avec le polymère. Avec les polymères thermotropes de la présente invention, cet autre groupe fonctionnel peut être un groupe amino ou un groupe époxy. Des exemples de composés organosiliciques qui conviennent sont : le γ -aminopropyltriméthoxysilane, le γ -aminopropyltriéthoxysilane, le N-(β -aminoéthyl) γ -aminopropyltriméthoxysilane, le β -(époxy-3,4 cyclohexyl)éthyltriméthoxysilane, le γ -glycidoxypropyltriméthoxysilane.

La quantité d'agent de couplage nécessaire pour assurer une bonne liaison entre la charge minérale de renforcement et le polymère de base est relativement petite. Une quantité de seulement 0,1 % d'agent de couplage par rapport au poids de la charge peut être suffisante. En général, des quantités d'agent de couplage comprises entre 0,3 % et 4 % se révèlent très satisfaisantes.

Les compositions polymères thermotropes renforcées selon la présente invention peuvent être préparées de diverses manières connues en soi.

Le mélange des divers constituants peut être réalisé par exemple en deux périodes : une première période dans laquelle les divers constituants sont agités ensemble à température ambiante (23° C) dans un mélangeur à poudre classique (qui peut être simplement la trémie d'alimentation d'une extrudeuse) et une seconde période dans laquelle ce pré-mélange est homogénéisé par malaxage à chaud à une température supérieure à 200° C dans une extrudeuse à une ou plusieurs vis. On peut prévoir, au besoin, entre ces deux périodes, de réaliser un séchage à un degré variable du pré-mélange obtenu à l'issue de la première période. Après ces traitements, les compositions de l'invention sont transformées en général en granulés qui seront utilisés ultérieurement pour le conformage des articles souhaités en opérant dans les appareils classiques de moulage.

Dans le cas où l'on met en oeuvre un agent de couplage, ce dernier peut être incorporé dans le milieu de préparation des compositions selon l'invention de différentes manières : selon une première variante, l'agent de couplage peut être déposé au préalable sur la charge qui va servir à renforcer le polymère ; selon une seconde variante, l'agent de couplage peut être déposé au préalable sur le polymère avant l'ajout de la charge ; selon une troisième variante, l'agent de couplage peut être mélangé directement avec le polymère et la charge. Compte tenu de ce qui précède, l'expression "divers constituants", qui apparaît ci-avant à propos du mode de préparation des compositions selon l'invention, va signifier : variante 1 : charge minérale

prétraitée + polymère ; variante 2 : charge minérale + polymère prétraité ; variante 3 : polymère + charge minérale + agent de couplage.

Le traitement par l'agent de couplage, quand on en utilise un, s'effectue habituellement par incorporation directe ou progressive de ce dernier, à l'état pur ou dissout dans un solvant approprié, dans la charge (variante 1), dans le polymère (variante 2) ou dans l'ensemble charge + polymère (variante 3). Dans le cas de la variante 1 notamment, il est possible de traiter la charge par la technique du mélange en lit fluidisé ou par la technique employant un mélangeur rapide.

Les compositions polymères selon l'invention peuvent être préparées encore en confectionnant un mélange-maître, présenté sous forme de granulés ou de pâte à base d'une partie du polymère à renforcer, de charge et éventuellement d'agent de couplage, qui sera mélangé ensuite avant mise en oeuvre avec des granulés ou une pâte du reste du polymère à renforcer.

Les compositions selon l'invention peuvent contenir, en outre, un ou plusieurs additifs comme par exemple des pigments, des stabilisants, des agents de nucléation, des modificateurs de caractéristiques à l'écoulement et des agents ignifugeants. Les quantités incorporées de ces additifs ne dépassent pas en général 40 % du poids de la matrice polymère.

Les compositions selon l'invention peuvent ensuite être moulées par injection suivant la pratique générale en utilisant des techniques connues et en opérant à l'intérieur de la plage d'anisotropie du polymère thermotrope. On fera noter que la thermotropie est facile à mettre en évidence lorsqu'on observe le polymère à l'état fondu dans un système optique équipé de deux polariseurs croisés (90° d'angle) : il se produit pour les échantillons anisotropes une biréfringence et une transmission de la lumière polarisée à travers les polariseurs croisés. La mie en évidence de l'anisotropie des polymères thermotropes selon la présente invention a été effectuée par la méthode thermo-optique TOT décrite dans le brevet français 2 270 282. On entend par "plage d'anisotropie", l'intervalle de température qui part de la température à laquelle apparaît la biréfringence et la transmission de la lumière à travers les deux polariseurs croisés et qui se situe au-dessus de ladite température, intervalle ayant une borne supérieure variable et dans lequel la masse fondue est anisotrope sans aucun risque de décomposition du polymère. En général, les masses fondues anisotropes qui sont visées dans le cadre de la présente invention possèdent une plage d'anisotropie étalée sur au moins 30° C.

Les articles conformés obtenus présentent au moins les deux propriétés suivantes :

- le rapport d'anisotropie (RA) est réduit d'au moins 50 % ; par exemple, un taux de réduction du RA de 67,7 % peut être atteint avec seulement 26,7 % en poids de mica noir du genre phlogopite commercialisé par la Société MARIETTA sous la dénomination SUZORITE 60 S ; et
- de plus la somme ML + MT est au moins égale à 1,5 fois la valeur de la même somme obtenue dans le cas du polymère non chargé ; par exemple, dans le cas de la charge particulière précitée, cette somme est égale à 2,09 fois la valeur prise en référence.

Les exemples non limitatifs qui suivent montrent comment la présente invention peut être mise en oeuvre pratiquement.

EXEMPLES 1 A 6 ET ESSAIS COMPARATIFS A - F :

1. Description du polymère thermotrope utilisé

On prépare un copolyester aromatique du type de celui décrit dans la demande de brevet européen n° 86420013.4 publiée sous le n° 0.191.705.

Dans un réacteur de polycondensation de 7,5 litres agitée et chauffé par un fluide caloporteur circulant dans la double enveloppe du réacteur, muni d'un dispositif de distillation et de balayage par un gaz inerte, on introduit les réactifs suivants :

(1) diacétate de méthylhydroquinone : 1456 g
rapport molaire (1)/(2) + (3) = 1
(2) acide téréphtalique : 581 g
50 % en mole dans mélange (2) + (3)
(3) dicarboxy-4,4′ diphényléther : 903 g
50% en mole dans mélange (2) + (3)
(4) acide para-acétoxybenzoïque : 756 g
60 % en mole par rapport à (1).

Le réacteur est purgé à l'azote, puis chauffé par le fluide caloporteur réglé à 260° C pendant 2 heures et 20 minutes. Le volume d'acide acétique distillé est de 890 $cm^3$ (soit 85 % de la théorie). On élève ensuite progressivement la température du fluide caloporteur jusqu'à 300° C en 60 minutes, en diminuant dans le même temps la pression de $1010.10^2$ Pa à $0,39.10^2$ Pa. Après que la distillation d'acide acétique se soit arrêtée, on maintient encore la température de 300° C et la pression de $0,39.10^2$ pendant 39 minutes. Le volume total d'acide acétique recueilli est de 1040 $cm^3$ (soit 100 % de la théorie).

Le polymère obtenu est grisâtre et d'aspect fibreux. Il possède une viscosité inhérente de 2,07 $dlg^{-1}$. La température d'écoulement est de 290° C. La plage d'anisotropie va de 290° C jusqu'à plus de 350° C.

2. Réalisation des compositions selon l'invention

Le copolyester thermotrope obtenu est utilisé pour préparer différentes compositions chargées avec des micas de différentes natures dans des proportions variables qui sont celles indiquées dans le tableau 1 donné

ci-après.

Le mode opératoire général de préparation de ces compositions est le suivant :

. En opérant dans un mélangeur à rouleaux ELTE 650 de la Société ENGELSMANN, on met en contact direct à température ambiante le polymère thermotrope et la charge minérale. Les micas mis en oeuvre appartiennent à la famille du mica noir, genre : phlogopite ; ils sont commercialisés par la Société MARIETTA sous les dénominations :

- SUZORITE 60 S : le diamètre moyen est de 280 µm et le facteur de forme est égal à 68 ;
- SUZORITE 150 S : le diamètre moyen est de 150 µm et le facteur de forme est égal à 47 ; et
- SUZORITE 325 S : le diamètre moyen est de 22 µm et le facteur de forme est égal à 33.

Le pré-mélange préparé avec chacun des micas précités est ensuite mis à sécher dans une étuve portée à 160°C pendant 16 heures, sous une pression réduite de $1,33.10^2$ Pa.

. Le pré-mélange étuvé est ensuite malaxé à l'état fondu dans une extrudeuse de marque LEISTRITZ comportant deux vis corotatives de diamètre D égale à 34 mm et de longueur égale à 35 D ; le profil des vis est adapté pour le travail des polyesters aromatiques ; l'extrudeuse est équipée d'une filière à un trou de 4 mm de diamètre ; les conditions de l'extrudeuse sont les suivantes :

| | |
|---|---|
| - température de filière | : 310°C, |
| - vitesse de rotation des vis | : 200 tours/min, |
| - débit matière | : environ 10 kg/h. |

Le produit recueilli sous forme de jonc est refroidi sous air ambiant, puis il est granulé et séché.

A partir des granulés obtenus, on prépare des plaques carrées de dimensions 100 x 100 x 2 mm qui sont moulées par injection. Ce moulage est effectué à l'aide d'une machine Vis-piston de marque BATTENFELD type BSKM 100/70 DS 2000 dans les conditions suivantes :

| | |
|---|---|
| - température matière | : 290°C, |
| - température du moule | : 100°C, |
| - pression d'injection | : $65.10^5$ Pa, |
| - pression de maintien | : $25.10^5$ Pa, |
| - durée d'un cycle d'injection | : 30 s. |

Les éprouvettes, dont la forme et les dimensions correspondent à celles définies par la norme mentionnée ci-après, sont prélevées dans les plaques moulées obtenues afin de conduire des essais de flexion : le module en flexion est mesuré à 23°C sur des éprouvettes conditionnées à EH O (zéro % d'humidité relative) selon les indications de la norme NE T 51001 (les éprouvettes sont placées en dessicateur sur silicagel et séchées de nouveau 24 heures à température ambiante sous une pression réduite de $0,67.10^2$ à $1,33.10^2$ Pa avant de réaliser les mesures) ; à noter que cette propriété mécanique a été mesurée sur des éprouvettes prélevées d'une part longitudinalement (sens de l'injection) et d'autre part transversalement (sens perpendiculaire à l'injection). Les résultats des essais de flexion sont indiqués dans le tableau 1 suivant.

A titre d'essais comparatifs, on a reproduit les mêmes opérations que celles décrites ci-avant, mais :

- essai A : sans utiliser de charge minérale et en n'effectuant donc pas de pré-mélange,
- essais B, C et D : en utilisant des quantités de mica qui se situent en dehors de l'intervalle de valeurs conforme à la présente invention.

A titre d'autres essais comparatifs, on a reproduit les mêmes opérations que celles décrites ci-avant, mais en utilisant cette fois, à la place du mica, une quantité comparable :

- essai E : de fibres de verre ayant une longueur moyenne de 4500 µm et un diamètre moyen de 15 µm, commercialisées par la Société OWENS CORNING FIBERGLAS sous la référence 429 YZ ; et
- essai F : de wollastonite ayant une longueur moyenne de fibres de 75 µm et un diamètre moyen de 25 µm, commercialisé par la Société PARAISTEN KALKKIOY.

TABLEAU 1

| EXEMPLE/ESSAI | NATURE DE LA CHARGE | QUANTITE DE CHARGE | | MODULE EN FLEXION GPa | | | |
|---|---|---|---|---|---|---|---|
| | | % Poids | % Volume | ML | MT | Rapport d'anisotropie ML/MT | Somme ML + MT |
| A | - | 0 | 0 | 9,8 | 2,1 | 4,67 | 11,9 |
| B | MICA 60 S | 10,7 | 5,7 | 11,7 | 4,6 | 2,54 | 16,3 |
| 1 | MICA 60 S | 26,7 | 15,4 | 15,0 | 9,9 | 1,51 | 24,9 |
| C | MICA 150 S | 11,0 | 5,9 | 11,4 | 4,0 | 2,85 | 15,4 |
| 2 | MICA 150 S | 29,6 | 17,4 | 13,0 | 8,3 | 1,57 | 21,3 |
| 3 | MICA 150 S | 44,5 | 28,6 | 18,1 | 14,2 | 1,27 | 32,3 |
| D | MICA 325 S | 9,7 | 5,1 | 10,4 | 3,7 | 2,81 | 14,1 |
| 4 | MICA 325 S | 24,6 | 14,0 | 12,5 | 7,1 | 1,76 | 19,6 |
| 5 | MICA 325 S | 40,7 | 25,5 | 16,1 | 12,4 | 1,29 | 28,5 |
| 6 | MICA 325 S | 48,2 | 31,8 | 18,5 | 14,3 | 1,29 | 32,8 |
| E | FIBRE DE VERRE | 28,5 | 18,7 | 11,1 | 5,4 | 2,06 | 16,5 |
| F | WOLLASTONITE | 26,2 | 15,0 | 10,1 | 3,6 | 2,81 | 13,7 |

ML = module longitudinal en flexion.

MT = module transversal en flexion.

EXEMPLE 7 ET ESSAIS COMPARATIFS G,H ET I :

On a reproduit les mêmes opérations que celles décrites à l'exemple 1, mais en utilisant cette fois :

. à la place du polymère thermotrope conforme à la demande de brevet européen n° 86420013.4 issu du diacétate de méthylhydroquinone, le polymère thermotrope de même type issu du diacétate de chlorohydroquinone ; dans le réacteur décrit à l'exemple 1, paragraphe 1, on introduit maintenant les réactifs et catalyseurs suivants :

(1) diacétate de chlorohydroquinone : 1028 g
rapport molaire (1)/(2) + (3) = 1
(2) acide téréphtalique : 373 g
50 % en mole dans mélange (2) + (3)
(3) dicarboxy-4,4' diphényléther : 581 g
50 % en mole dans mélange (2) + (3)
(4) acide para-acétoxybenzoïque : 275,5 g
34 % en mole par rapport à (1)
(5) acétate de magnésium : 1,13 g
500 ppm.

Le réacteur est purgé à l'azote, puis chauffé par le fluide caloporteur réglé à 260° C pendant 2 heures et 20 minutes. Le volume d'acide acétique distillé est de 506 $cm^3$ (soit 83 % de la théorie). On élève ensuite progressivement la température du fluide oaloporteur jusqu'à 330° C en 40 minutes, en diminuant dans le même temps la pression de $1010.10^2$ Pa à $0,39.10^2$ Pa. Après que la distillation d'acide acétique se soit arrêtée, on maintient encore la température de 330° C et la pression de $0,39.10^2$ pendant 12 minutes 30 secondes. Le volume total d'acide acétique recueilli est de 602 $cm^3$ (soit 100 % de la théorie). Le polymère obtenu est grisâtre et d'aspeot fibreux. 51 possède une viscosité inhérente de 1,4 $dlg^{-1}$. La température d'écoulement est de 290° C. La plage d'anisotropie va de 290° C jusqu'à plus de 350° C ;

. et, à la place du mica, diverses quantités de talc naturel comercialisé par la Société des TALCS DE LUZENAC sous la dénomination 15 M 00 ; le diamètre moyen des particules est de 8 µm et le facteur de forme est de l'ordre de 20.

Les quantités de talc mises en oeuvre, qui se situent dans l'intervalle de valeurs conforme à la présente invention pour l'exemple 7, mais qui se situent en dehors de cet intervalle pour les essais H et I, et les propriétés mécaniques des objets obtenus sont rassemblées dans le tableau 2 suivant. Dans ce tableau, on trouvera également les résultats de l'essai témoin G conduit sans utiliser de talc.

TABLEAU 2

| EXEMPLE/ESSAI | QUANTITE DE TALC | | MODULE EN FLEXION GPa | | | |
|---|---|---|---|---|---|---|
| | % Poids | % Volume | ML | MT | Rapport d'anisotropie ML/MT | Somme ML + MT |
| G | 0 | 0 | 11,0 | 2,0 | 5,50 | 13,0 |
| H | 25 | 15 | 12,0 | 4,0 | 3,00 | 16,0 |
| I | 30 | 18 | 11,0 | 4,5 | 2,44 | 15,5 |
| 7 | 60 | 43 | 10,5 | 9,5 | 1,11 | 20,0 |

EXEMPLES 8 ET 9 ET ESSAIS COMPARATIFS J ET K :

On a reproduit les mêmes opérations que celles décrites ci-avant à l'exemple 1, mais en utilisant cette fois des polymères thermotropes commercialisés par la Société CELANESE sous la marque VECTRA :
- exemple 8 : le polymère utilisé est de type A 900 et il s'agit d'un polyester comprenant des unités de récurrence oxy-6 naphtoyl-2 (environ 20 % en mole) et paraoxybenzoyle (environ 80 % en mole) ;
- exemple 9 : le polymère utilisé est de type B 900 et il s'agit d'un polyesteramide comprenant des unités de récurrence oxy-6 naphtoyl-2, téréphtaloyle et paraaminobenzoyle.

La charge minérale utilisée est dans ces deux exemples le mica noir, genre : phlogopite, commercialisé sous la dénomination SUZORITE 60 S et ses quantités d'emploi sont dans les deux cas égales à 40 % en poids.

A titre d'essais comparatifs, on a reproduit les mêmes opérations, mais sans utiliser de charge minérale : essai J avec le polymère de type A 900 pur ; et essai K avec le polymère de type B 900 pur.

Les propriétés mécaniques des objets obtenus sont rassemblées dans le tableau 3 suivant.

TABLEAU 3

| EXEMPLE/ESSAI | NATURE DU MICA | QUANTITE DE MICA | | MODULE EN FLEXION GPa | | | |
|---|---|---|---|---|---|---|---|
| | | % Poids | % Volume | ML | MT | Rapport d'anisotropie ML/MT | Somme ML + MT |
| J | - | 0 | 0 | 10,7 | 2,9 | 3,69 | 13,6 |
| 8 | 60 S | 40 | 28,6 | 19,15 | 10,8 | 1,77 | 29,9 |
| K | - | 0 | 0 | 17,3 | 4,3 | 4,02 | 21,6 |
| 9 | 60 S | 40 | 28,6 | 26,9 | 13,8 | 1,95 | 40,7 |

## Revendications

1/ Compositions de moulages qui comprennent :

a) un polymère thermotrope, et

b) une charge minérale de renforcement,

caractérisées en ce que la charge minérale (b) répond aux définitions suivantes :

. elle appartient à la famille des charges minérales cristallines de forme plaquettaire ayant un diamètre moyen qui se situe dans l'intervalle allant de 0,5 à 400 µm et un facteur de forme représenté par le rapport :

$$\frac{\text{diamètre moyen des particules en µm}}{\text{épaisseur moyenne des particules en µm}}$$

qui se situe dans l'intervalle allant de 10 à 90 ;

. elle est mise en oeuvre en utilisant des quantités d'emploi, exprimées en % en poids de charge dans l'ensemble polymère + charge, qui se situent dans l'intervalle allant de 20 % à 60 %, avec la condition complémentaire selon laquelle ces quantités se situent dans l'intervalles allant d'une valeur supérieure à 50 % jusqu'à 60 % quand le diamètre moyen des particules est inférieur à 20 µm.

2/ Compositions selon la revendication 1, caractérisées en ce que les polymères thermotropes qui conviennent sont les polyesters totalement aromatiques, les polyesters alkylaromatiques, les polyesteramides totalement aromatiques, les polyesteramides alkylaromatiques, les polyazométhines aromatiques, les polyesters carbonates aromatiques et les mélanges de ces polymères.

3/ Compositions selon la revendication 2, caractérisées en que que les polymères thermotropes auxquels on fait appel sont les polyesters totalement aromatiques, les polyesteramides totalement aromatiques et les mélanges de ces polymères.

4/ Compositions selon l'une quelconque des revendications 1 à 3, caractérisées en ce que les polymères thermotropes possèdent une température d'écoulement se situant dans l'intervalle allant de 200° C à 350° C et présentent une viscosité inhérente au moins égale à 0,5 $dlg^{-1}$.

5/ Compositions selon l'une quelconque des revendications 1 à 4, caractérisées en ce que la charge minérale cristalline de forme plaquettaire à laquelle on fait appel consiste en du mica, du talc naturel, du talc calciné ou un mélange de ces espèces.

6/ Compositions selon la revendication 5, caractérisées en ce que l'on fait appel à du mica.

7/ Compositions selon l'une quelconque des revendications 1 à 6, caractérisées en ce qu'elles peuvent comprendre en outre, à côté du polymère thermotrope a) et de la charge minérale b), un agent de couplage consistant dans un composé organosilicique polyfonctionnel comprenant au moins un groupe alkoxysilane capable de se lier avec la charge minérale et au moins un groupe capable de se lier avec le polymère a).

8/ Articles conformés réalisés par moulage à partir des compositions selon l'une quelconque des revendications 1 à 7 précédentes.

9/ Articles selon la revendication 8, caractérisés en ce qu'ils présentent au moins les deux propriétés suivantes :

- le rapport d'anisotropie (RA) est réduit d'au moins 50 % ;
- de plus la somme ML + MT est au moins égale à 1,5 fois la valeur de la même somme obtenue dans le cas du polymère non chargé.

## Revendications pour l'Etat contractant suivant: ES

1/ Procédé de préparation de composition de moulages comprenant :

a) un polymère thermotrope, et

b) une charge minérale de renforcement,

qui consiste dans les étapes suivantes :

- une première période dans laquelle les divers constituants sont agités ensemble à température ambiante dans un mélangeur à poudre classique,
- une seconde période dans laquelle ce pré-mélange est homogénéisé par malaxage à chaud à une température supérieure à 200° C dans une extrudeuse à une ou plusieurs vis,

ledit procédé étant caractérisé en ce que la charge minérale (b) répond aux définitions suivantes :

. elle appartient à la famille des charges minérales cristallines de forme plaquettaire ayant un diamètre moyen qui se situe dans l'intervalle allant de 0,5 à 400 µm et un facteur de forme représenté par le rapport :

$$\frac{\text{diamètre moyen des particules en } \mu m}{\text{épaisseur moyenne des particules en } \mu m}$$

qui se situe dans l'intervalle allant de 10 à 90 ;

. elle est mise en oeuvre en utilisant des quantités d'emploi, exprimées en % en poids de charge dans l'ensemble polymère + charge, qui se situent dans l'intervalle allant de 20 % à 60 % avec la condition complémentaire selon laquelle ces quantités se situent dans l'intervalles allant d'une valeur supérieure à 50 % jusqu'à 60 % quand le diamètre moyen des particules est inférieur à 20 µm.

2/ Procédé selon la revendication 1, caractérisées en ce que les polymères thermotropes qui conviennent sont les polyesters totalement aromatiques, les polyesters alkylaromatiques, les polyesteramides totalement aromatiques, les polyesteramides alkylaromatiques, les polyazométhines aromatiques, les polyesters carbonates aromatiques et les mélanges de ces polymères.

3/ Procédé selon la revendication 2, caractérisées en que que les polymères thermotropes auxquels on fait appel sont les polyesters totalement aromatiques, les polyesteramides totalement aromatiques et les mélanges de ces polymères.

4/ Procédé selon l'une quelconque des revendications 1 à 3, caractérisées en ce que les polymères thermotropes possèdent une température d'écoulement se situant dans l'intervalle allant de 200° C à 350° C et présentent une viscosité inhérente au moins égale à 0,5 $dlg^{-1}$.

5/ Procédé selon l'une quelconque des revendications 1 à 4, caractérisées en ce que la charge minérale cristalline de forme plaquettaire à laquelle on fait appel consiste en du mica, du talc naturel, du talc calciné ou un mélange de ces espèces.

6/ Procédé selon la revendication 5, caractérisées en ce que l'on fait appel à du mica.

7/ Procédé selon l'une quelconque des revendications 1 à 6, caractérisées en ce que les constituants des compositions de moulage peuvent comprendre en outre, à côté du polymère thermotrope a) et de la charge minérale b), un agent de couplage consistant dans un composé organosilicique polyfonctionnel comprenant au moins un groupe alkoxysilane capable de se lier avec la charge minérale et au moins un groupe capable de se lier avec le polymère a).

Office européen des brevets

# RAPPORT DE RECHERCHE EUROPEENNE

Numero de la demande

EP 89 42 0252

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| X | GB-A-2 124 236 (DART INDUSTRIES) * Revendications 1,4-14; exemple 10; page 3, lignes 22-41 * | 1-3,5,8 | C 08 K 7/00<br>C 08 L 67/00 |
| X | MOLECULAR CRYSTALS AND LIQUID CRYSTALS, vol. 157, 1988, pages 577-596, Gordon and Breach Science Publishers, New York, US; T.G. RYAN: "Modification of main chain LCP processability and properties" * En entier * | 1-6 | |
| A | GB-A-2 167 513 (CELANESE CORP.) * Revendications 1,6-12; page 9, lignes 14-16 * | 1-8 | |

DOMAINES TECHNIQUES RECHERCHES (Int. Cl.4)

C 08 K
C 08 L
C 08 G

Le présent rapport a été établi pour toutes les revendications

| Lieu de la recherche | Date d'achèvement de la recherche | Examinateur |
|---|---|---|
| LA HAYE | 28-02-1989 | SCHUELER D.H.H. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant